# FASCICULE DE BREVET EUROPEEN

(11) **EP 1 151 204 B1**
(45) Date de publication et mention de la délivrance du brevet: **28.04.2004**
(21) Numéro de dépôt: 00906433.8
(22) Date de dépôt: 18.02.2000
(51) Int. Cl.: F16B 37/04

(54) **DISPOSITIF DE FIXATION DE DEUX PANNEAUX OU ANALOGUES FORME DE DEUX PIECES COOPERANTES**
AUS ZWEI ZUSAMMENWIRKENDEN TEILEN ZUSAMMENGESETZTE VORRICHTUNG ZUR BEFESTIGUNG VON ZWEI PANEELEN ODER ÄHNLICHEN
DEVICE FOR ASSEMBLING TWO PANELS OR THE LIKE AND FORMED BY TWO CO-OPERATING PARTS

(30) Priorité: 19.02.1999 FR 9902091; 23.07.1999 FR 9909608
(43) Date de publication de la demande: 07.11.2001
(73) Titulaire: RAPID S.A., F-75017 Paris (FR)
(72) Inventeur: LEON, Jean-Pierre, René, F-78800 Houilles (FR); BLUON, Philippe, Maurice, Georges, F-93300 Aubervilliers (FR); PEROL, Rodolphe, Dominique, Gilles, F-78100 St. Germain en Laye (FR)
(74) Mandataire: Bentz, Jean-Paul
(86) Numéro de dépôt international: PCT/FR2000/000418
(87) Numéro de publication internationale: WO 2000/049299

(56) Documents cités:
- FR-A- 2 464 396
- GB-A- 1 163 400
- GB-A- 1 260 094
- US-A- 5 100 273

## Description

La présente invention concerne un dispositif de fixation comprenant une pièce mâle et une pièce femelle sélectivement engagées dans des perçages traversant un empilement d'au moins deux panneaux, ces pièces coopérant sélectivement entre elles pour maintenir les panneaux en empilement.

Plus précisément, la présente invention concerne un dispositif de fixation comprenant une pièce mâle et une pièce femelle sélectivement engagées dans des perçages traversant un empilement d'au moins deux panneaux, ces pièces coopérant sélectivement entre elles pour maintenir les panneaux en empilement, dispositif dans lequel la pièce femelle est une agrafe élastique formée d'un chapeau prolongé par un pied creux présentant des dimensions transversales internes minimum et maximum différentes, dans lequel la pièce mâle comprend une tête prolongée par un fût présentant au moins une première dimension transversale déterminée, intermédiaire entre les dimensions transversales internes minimum et maximum, ce fût étant sélectivement introduit dans le pied creux, à travers une ouverture du chapeau, et le pied creux adoptant sélectivement, en fonction au moins d'une position axiale relative du fût et du pied creux, et pour au moins une première position de rotation relative du fût et du pied, une configuration de non verrouillage dans laquelle le pied présente un encombrement transversal réduit, et une configuration de verrouillage, dans laquelle le pied est soumis de la part du fût à une expansion élastique radiale.

Des dispositifs de ce type sont par exemple décrits dans les documents de brevets FR-2 464 396, GB-1 260 094 et GB-1 163 400.

En dépit de la diversité des structures qu'illustrent ces documents antérieurs, les dispositifs connus ne permettent pas d'assurer un maintien sans jeu de l'empilement de panneaux, au moins dans une gamme donnée d'épaisseur de cet empilement.

Dans ce contexte, la présente invention a précisément pour but de proposer un dispositif propre à résoudre ce problème.

A cette fin, le dispositif de l'invention, par ailleurs conforme à la définition générique qu'en donne le préambule ci-dessus, est essentiellement caractérisé en ce que le chapeau est formé d'une lame ressort qui est repliée sur elle-même et qui comprend au moins une branche interne reliée au pied creux et une branche externe dans laquelle est percée l'ouverture du chapeau, et en ce que les branches interne et externe sont distantes l'une de l'autre au moins pour la configuration de non verrouillage du pied creux et sont conformées pour permettre une déformation élastique d'une partie au moins de la branche externe lorsque le pied passe de sa configuration de non verrouillage à sa configuration de verrouillage.

Dans un mode de réalisation préféré de l'invention, le pied creux comprend une pluralité de pattes présentant des extrémités liées respectives par lesquelles ces pattes se rattachent au chapeau, et des extrémités libres respectives radialement convergentes, définissant entre elles la dimension transversale interne minimum du pied.

Les pièces mâle et femelle comprennent avantageusement au moins des premier et second accidents de surface respectifs disposés en regard l'un de l'autre pour une position relative axiale extrême des pièces mâle et femelle, sélectivement obtenue par introduction complète du fût dans le pied, les premier et second accidents de surface coopérant mutuellement pour assurer un maintien des pièces mâle et femelle dans leur position relative axiale extrême.

Le premier accident de surface peut par exemple être formé par une protubérance radiale du fût, telle qu'un filet de vis si le fût est une tige filetée, ou un ergot, et le second accident de surface peut être formé par les extrémités libres des pattes.

Pour augmenter la déformation du pied entre sa configuration de non verrouillage et sa configuration de verrouillage, le premier accident de surface peut avantageusement être constitué par un ergot disposé en regard d'une fenêtre correspondante du pied, cet ergot traversant la fenêtre lorsque le pied est à la fois dans la configuration de non verrouillage et dans la première position de rotation relative avec le fût.

Dans un mode de réalisation efficace de l'invention, le pied creux comprend deux pattes séparées l'une de l'autre par un espace libre pour la configuration de non verrouillage du pied, et le fût présente au moins une seconde dimension transversale s'inscrivant sélectivement dans l'espace libre, ce dont il résulte que le pied creux adopte sélectivement sa configuration de non verrouillage pour une seconde position de rotation relative du fût et du pied, indépendamment de la position axiale relative des pièces mâle et femelle.

Par exemple, le fût comporte deux parties lisses formant chacune un méplat s'étendant axialement, ces parties lisses permettant de déverrouiller le dispositif de fixation par rotation du fût par rapport au pied.

Dans ce cas, les pièces mâle et femelle comprennent avantageusement au moins des troisième et quatrième accidents de surface respectifs disposés en regard l'un de l'autre pour la configuration de verrouillage du pied, ces troisième et quatrième accidents de surface coopérant mutuellement pour assurer un maintien des pièces mâle et femelle dans leur première position de rotation relative.

Une languette élastique radiale peut être prévue dans l'ouverture du chapeau pour coopérer sélectivement avec le fût et le maintenir dans une position axiale déterminée, ou dans une position de rotation qui conditionne l'une des configurations de verrouillage ou de non verrouillage.

Par ailleurs, la branche interne du chapeau comporte de préférence au moins deux languettes élastiques internes propres à appliquer une pression sur l'empilement de panneaux dans la configuration de verrouillage du pied.

L'agrafe est avantageusement réalisée par découpage, pliage et traitement thermique d'un flan métallique et par exemple réalisée en acier trempé.

Les troisième et quatrième accidents de surface peuvent être respectivement constitués par une nervure axiale du fût et par une découpe correspondante du chapeau, ou encore par un embrèvement de la tête et par un bossage du chapeau.

Le fût peut en outre présenter un bourrelet engagé dans l'ouverture du chapeau à l'encontre d'une force élastique et rendant les pièces mâle et femelle imperdables l'une par rapport à l'autre.

Pour obtenir une déformation élastique de la branche externe, on peut prévoir que la tête vienne en appui sur cette branche externe, pour la configuration de verrouillage du pied, et rapproche l'une de l'autre les branches interne et externe pour développer entre elles une contrainte élastique.

Cependant, il est également possible de prévoir que la tête traverse la branche externe et s'appuie sur la branche interne du chapeau pour la configuration de verrouillage du pied.

Dans ce dernier cas, qui permet de maintenir des empilements d'épaisseurs très diverses sans changer le diamètre des perçages qui les traversent, la pièce mâle peut comporter une seconde tête qui reste à l'extérieur de la branche externe, même pour la configuration de verrouillage du pied, et qui facilite le démontage du dispositif.

La surface extérieure du pied creux correspond de préférence à la forme des perçages pratiqués dans l'empilement de panneaux, la plus grande dimension transversale du perçage du panneau inférieur pouvant elle-même être adaptée à l'épaisseur de l'empilement, en particulier si la déformation élastique de la branche externe est obtenue par une pression exercée par la tête sur cette branche.

Ainsi, l'invention concerne également un ensemble constitué d'un dispositif de fixation, tel que précédemment défini en relation avec cette solution, et d'un empilement de panneaux ou analogues dans lesquels sont pratiqués des perçages, cet ensemble étant tel que :
- l'épaisseur cumulée des panneaux est comprise entre 0,5 et 3 mm tandis que la plus grande dimension transversale du perçage du panneau inférieur est de 7,7 mm,
- ou l'épaisseur cumulée des panneaux est comprise entre 3 et 4,5 mm, tandis que la plus grande dimension transversale du perçage du panneau inférieur est de 8,2 mm ;
- ou l'épaisseur cumulée des panneaux est comprise entre 4,5 et 6 mm, tandis que la plus grande dimension transversale du perçage du panneau inférieur est de 8,7 mm,
- ou encore l'épaisseur cumulée des panneaux est comprise entre 6 et 7 mm, tandis que la plus grande dimension transversale du perçage du panneau inférieur est de 9,2 mm.

D'autres buts, caractéristiques et avantages de l'invention ressortiront clairement de la description détaillée qui en est faite ci-après, à titre indicatif et nullement limitatif, en référence aux dessins annexés, donnés uniquement à titre d'exemples, et dans lesquels :
- la figure 1 est une vue éclatée en perspective du dispositif de fixation selon l'invention ;
- la figure 2 est une vue similaire à la figure 1 qui montre le dispositif selon l'invention, en cours de montage sur des panneaux ;
- la figure 3 est une vue en coupe axiale du dispositif de fixation illustré aux figures 1 et 2, une fois monté sur les panneaux ;
- la figure 4 est une vue en perspective d'une variante de réalisation d'un dispositif de fixation selon l'invention, en position verrouillée sur les panneaux ;
- la figure 5 est une vue similaire à la figure 4 montrant le dispositif de fixation selon l'invention en position non verrouillée ;
- la figure 6 est une vue de face d'une seconde variante de réalisation d'un dispositif de fixation selon l'invention, en configuration non verrouillée, et dans laquelle les pièces mâle et femelle adoptent une première position relative de rotation ;
- la figure 7 est une vue de face du dispositif de fixation de la figure 6, en configuration verrouillée sur des panneaux vus en coupe ;
- la figure 8 est une vue de face du dispositif de fixation de la figure 6, en configuration non verrouillée, et dans laquelle les pièces mâle et femelle adoptent une seconde position relative de rotation ;
- la figure 9 est une vue de dessus du dispositif de fixation de la figure 6, dans sa configuration illustrée par la figure 7;
- la figure 10 est une vue en perspective du dispositif de fixation de la figure 6 ;
- la figure 11 est une première vue en perspective de la pièce mâle du dispositif de fixation de la figure 6 ;
- la figure 12 est une seconde vue en perspective de la pièce mâle du dispositif de fixation de la figure 6 ;
- la figure 13 est une vue en perspective du dispositif de fixation de la figure 6 représenté dans sa configuration illustrée à la figure 7 ;
- la figure 14 est une vue de face d'une autre variante de réalisation du dispositif de l'invention;
- la figure 15 est une vue de côté du dispositif illustré à la figure 14 ;
- la figure 16 est une vue en perspective d'un dispositif conforme à un autre mode de réalisation de l'invention, représenté dans sa configuration non verrouillée;
- la figure 17 est une vue en coupe axiale du dispositif illustré à la figure 16;
- la figure 18 est une vue de dessus du dispositif illustré à la figure 16;
- la figure 19 est une vue de côté du dispositif illustré à la figure 16, représenté dans sa configuration de verrouillage;
- la figure 20 est une vue en perspective du dispositif illustré à la figure 16, représenté désassemblé; et
- la figure 21 est une vue de côté d'un dispositif constitué par une variante du dispositif illustré à la figure 16, représenté dans sa configuration non verrouillée.

Par convention, des éléments désignés par les mêmes références sur des figures différentes sont à considérer comme équivalents ou identiques. En revanche, le fait, pour des éléments apparaissant sur des figures différentes, d'être désignés par des références différentes n'implique pas nécessairement que ces éléments sont ou doivent impérativement être différents, en particulier s'ils sont désignés par un même nom.

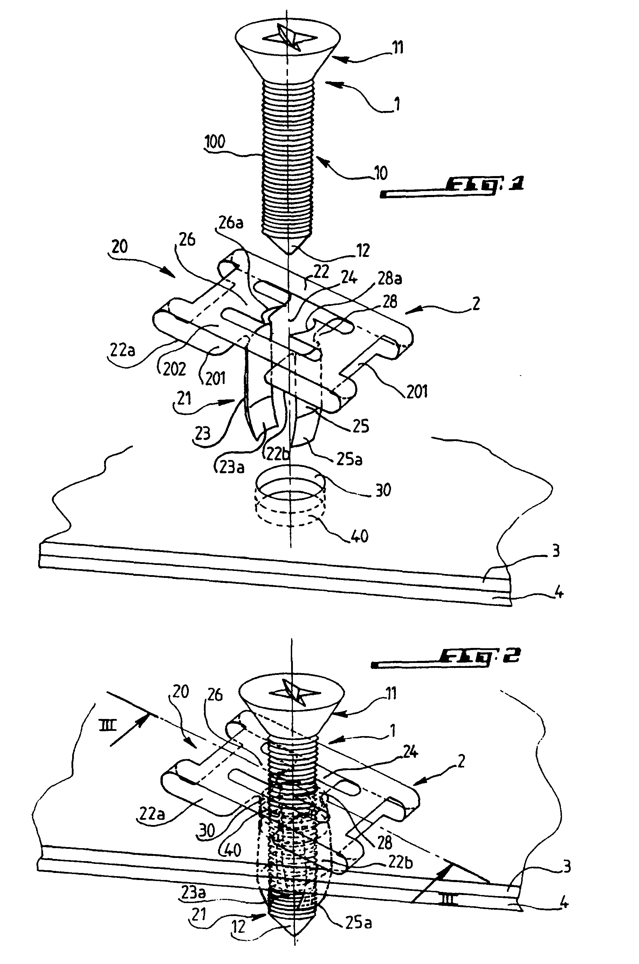

La figure 1 montre un dispositif de fixation conforme à l'invention, constitué de deux pièces coopérantes, à savoir une pièce mâle 1 prenant par exemple la forme d'une vis ou d'un pion métallique ou plastique, et une pièce femelle 2 constituée par une agrafe élastiquement déformable, de préférence métallique.

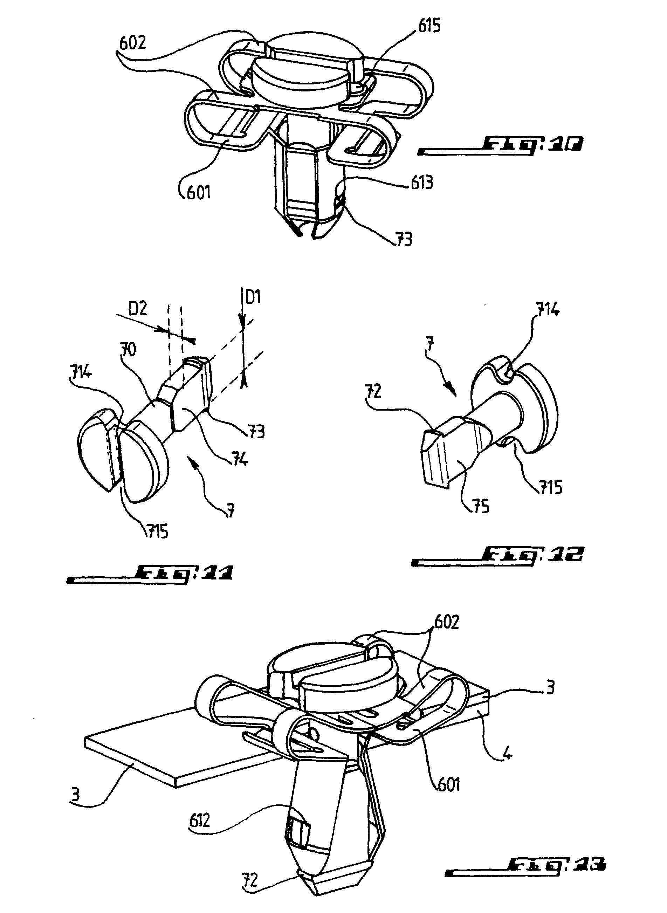

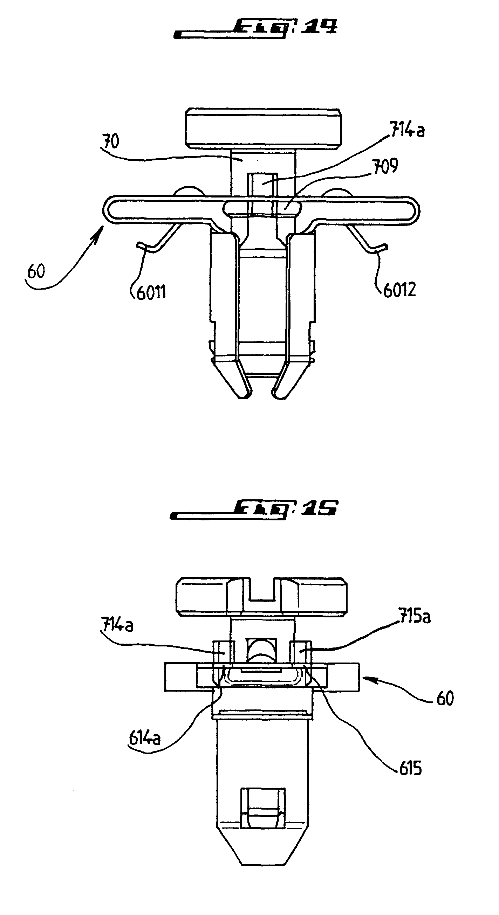

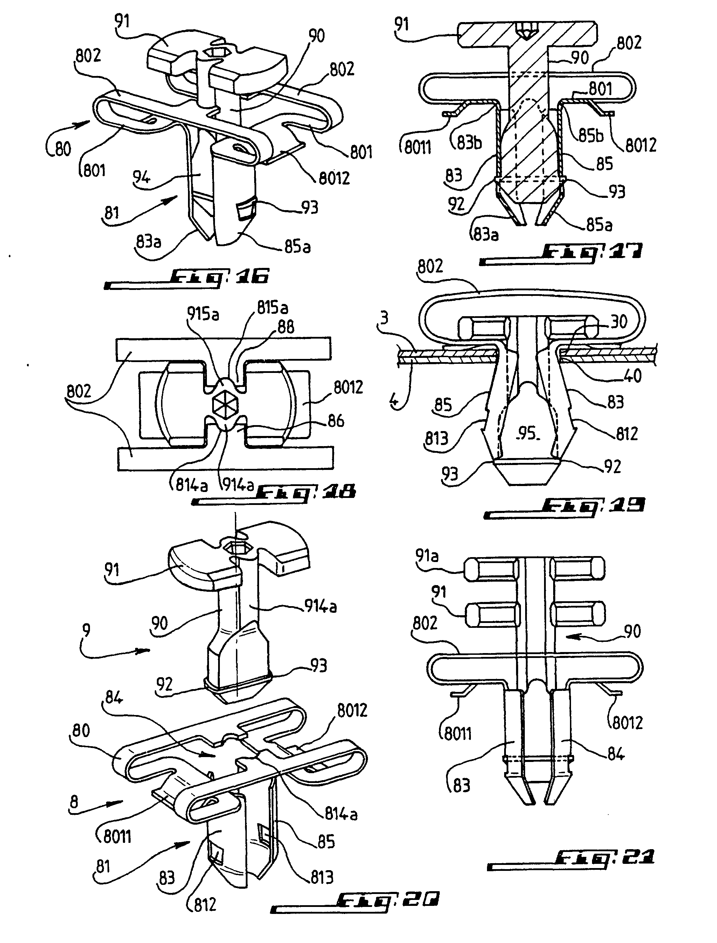

La pièce mâle 1 comprend un fût ou une tige 10 qui peut, ou non, être fileté(e), c'est-à-dire porter un filetage, tel que 100, comme le montrent les figures 1 à 5, ou être lisse comme le montrent les figures 6 à 20.

La pièce mâle 1 comprend par ailleurs une tête 11 à une extrémité du fût ou de la tige 10.

Bien que les différentes figures annexées représentent la tête 11 sous la forme d'un élargissement du fût ou tige 10, dont l'intérêt sera décrit ultérieurement, la tête 11 pourrait être simplement constituée par une extrémité non élargie de la tige 10, pour autant qu'elle permette de déplacer le fût ou tige 10 axialement et angulairement.

L'agrafe 2 présente une forme générale en T dont la barre horizontale est le chapeau 20 et la barre verticale, le pied 21.

Le chapeau 20 est, de préférence, constitué par un flan métallique 22, en partie évidé, et dont les bords 22a et 22b sont repliés. Ceci permet de rendre le chapeau 20 élastiquement déformable.

Dans le flan 22 est pratiqué un orifice 24 pour le passage de la tige 10.

Le chapeau 20 se prolonge par le pied 21 qui est creux et se trouve en regard de l'orifice 24.

Dans les exemples de réalisation illustrés, le pied 21 est constitué de deux pattes telles que 23 et 25. Chacune de ces pattes 23, respectivement 25, s'étend depuis un bord replié 22a, respectivement 22b du chapeau 20. En pratique, le pied 21 et le chapeau 20 peuvent être obtenus à partir du même flan de métal, l'invention n'étant cependant pas limitée à ce mode de réalisation de l'agrafe 2.

Par ailleurs, le pied 21 pourrait éventuellement comporter un nombre différent de pattes.

Selon l'invention, l'extrémité libre 23a, 25a des pattes 23 et 25 est inclinée vers l'intérieur du pied 21, dans le sens de l'introduction de la tige 10 dans l'agrafe 2, c'est-à-dire de haut en bas sur la figure 1.

Dans l'exemple de réalisation illustré à la figure 1, le flan 22 comporte également deux languettes radiales 26, 28 qui s'étendent dans l'orifice 24.

Le bord d'extrémité libre 26a, 28a de chacune de ces languettes 26, 28 présente une forme concave correspondant à la forme extérieure de la tige 10, ces deux bords d'extrémité libre définissant un passage dont les dimensions sont légèrement inférieures au diamètre de la tige 10.

Ainsi, avant même le montage du dispositif de fixation sur les panneaux 3 et 4, l'élément mâle 1, en l'occurrence la vis 1, peut être légèrement engagée dans l'ouverture 24 de l'agrafe 2 et y être maintenue, grâce à la coopération des languettes radiales 26 et 28 avec le filet 100 de la tige 10.

Le dispositif de fixation selon l'invention peut ainsi se présenter sous la forme de deux pièces, déjà rendues solidaires. Ce pré-assemblage de la tige 10 et de l'agrafe 2 permet de gagner du temps, lors de la mise en place du dispositif de fixation selon l'invention sur les panneaux 3 et 4.

Les panneaux 3 et 4 sur lesquels le dispositif de fixation est destiné à être monté comportent des perçages respectifs 30, 40, disposés en vis-à-vis lorsque ces panneaux sont superposés et bien que de formes et de tailles éventuellement différentes.

Bien entendu, le diamètre de la tige 10 et du pied 21 de l'agrafe 2 sont choisis de façon à ce qu'ils puissent être insérés dans ces perçages 30 et 40.

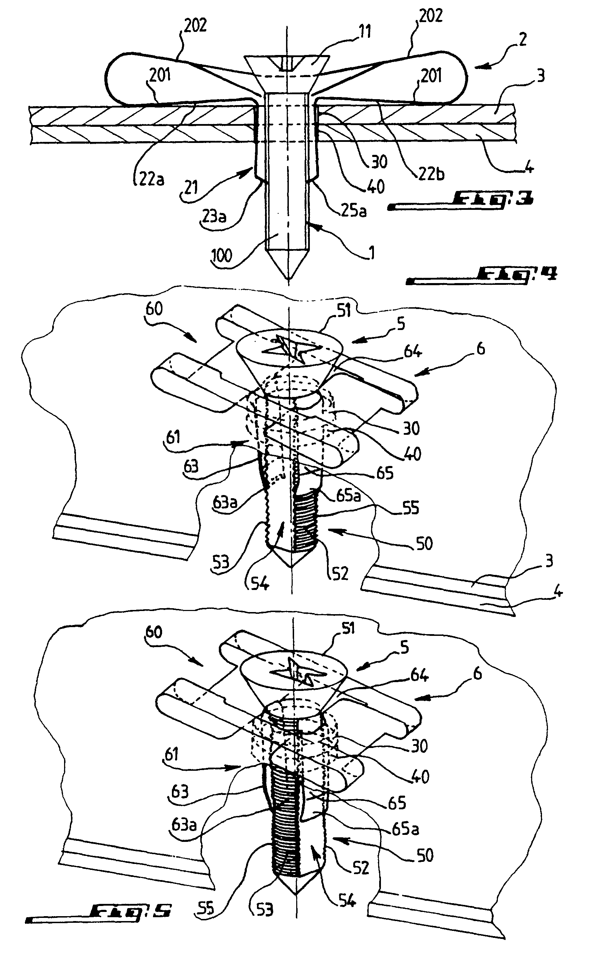

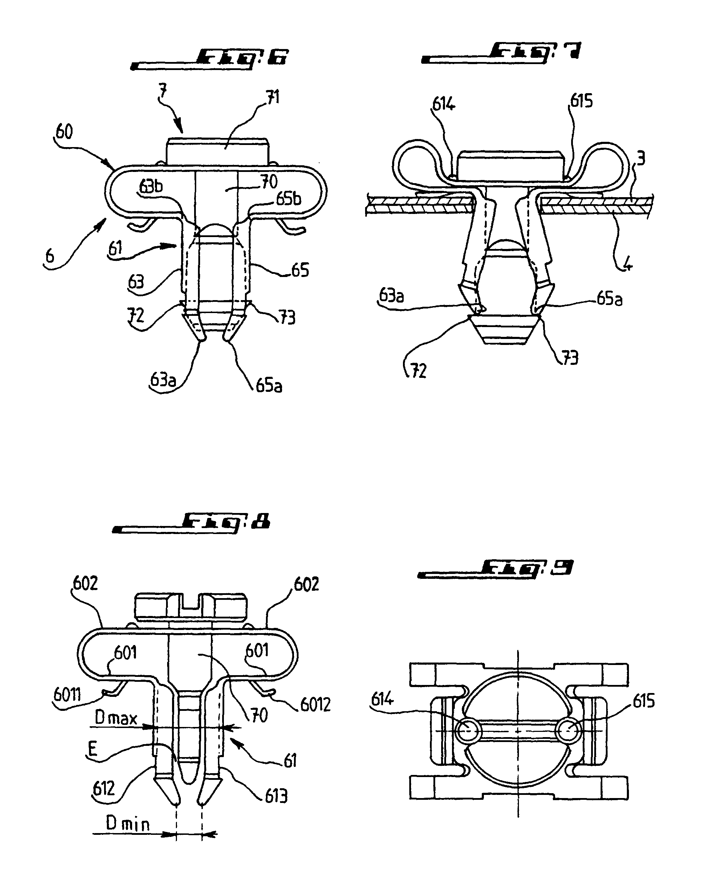

Le montage du dispositif de fixation selon l'invention sur les deux panneaux 3 et 4 superposés va maintenant être décrit en référence aux figures 2 et 3.

En référence tout d'abord à la figure 2 qui représente le dispositif de fixation en cours de montage, l'agrafe 2 a été insérée dans les orifices 30, 40 par son pied 21. Les bords 22a et 22b de l'agrafe sont donc en contact avec le panneau supérieur 3, tandis que le pied 21 s'étend au-delà du panneau 4.

La tige 10 est ensuite insérée dans l'ouverture 24, par sa pointe 12. Comme cela a été indiqué précédemment, si la tige 10 et l'agrafe 2 ont été pré-assemblées, il suffira d'exercer une pression sur la tête 11 pour enfoncer la tige dans le pied 21 de l'agrafe.

Lorsque la tige 10 est suffisamment enfoncée dans le pied 21, elle écarte les pattes 23 et 25 vers l'extérieur du fait de la coopération entre les extrémités libres 23a et 25a des pattes et la tige 10, ce qui réalise l'assemblage des panneaux 3 et 4. De plus, la coopération entre les extrémités libres et la tige empêche toute extraction de la tige.

En effet, les extrémités libres 23a et 25a sont inclinées vers l'intérieur du pied 21 et viennent donc en contact avec la tige 10 pour la bloquer, même si elle est lisse.

Dans l'exemple représenté sur les figures 1 à 5, la tige 10 comporte un filetage 100 et les extrémités libres 23a et 25a s'insèrent dans le filet.

De plus, les extrémités 23a et 25a des pattes sont inclinées dans le sens de l'introduction de la tige. Ainsi, elles ne s'opposent pas à l'insertion de la tige 10 dans le pied 21 mais elles s'opposent à toute force d'arrachement qui tendrait à sortir la tige de l'agrafe.

On se réfère maintenant à la figure 3 qui illustre le dispositif de fixation selon l'invention monté sur les panneaux 3 et 4.

A partir de la position relative de la tige 10 et de l'agrafe 2 illustrée à la figure 2, la tige 10 a été davantage enfoncée dans l'agrafe 2, jusqu'à ce que sa tête 11 vienne en appui sur l'agrafe. L'agrafe 2 se déforme élastiquement sous l'effet de la pression exercée par la tige 10.

La tige 10 met l'agrafe 2 sous contrainte, ce qui permet de mieux immobiliser les panneaux 2 et 3 et, en particulier, d'éviter les phénomènes de vibration.

Comme précédemment indiqué au regard de la figure 2, les extrémités libres 23a et 25a des pattes sont insérées dans le filet 100 de la tige 10 et s'opposent donc à toute force qui tendrait à extraire la tige 10 de l'agrafe 2.

Le dispositif de fixation selon l'invention est donc alors en position verrouillée, en assurant une fixation solide.

Lorsqu'on souhaite désolidariser les panneaux 3 et 4, il suffit de dévisser la tige 10, par exemple grâce à un outil approprié qui vient en prise avec la tête 11.

Le dispositif de fixation selon l'invention peut ainsi être facilement déverrouillé.

Une variante de réalisation du dispositif de fixation selon l'invention va maintenant être décrit en référence aux figures 4 et 5.

Le dispositif de fixation selon l'invention comprend toujours un élément mâle 5 et une agrafe 6 en forme générale de T et élastiquement déformable.

L'élément mâle comprend une tige 50 qui diffère de la tige filetée 10 en ce qu'elle comporte deux méplats 54 et 55 diamétralement opposés et s'étendant axialement, c'est-à-dire que la tige comporte deux parties lisses qui sont raccordées entre elles par des parties filetées 52, 53.

Par ailleurs, l'élément mâle 5 comporte toujours une tête 51.

L'agrafe 6 comporte, comme l'agrafe 2 illustrée aux figures 1 à 3, un chapeau 60 et un pied 61.

Le chapeau 60 est formé à partir d'une bande de tôle évidée et repliée pour rendre le chapeau élastique. Il se prolonge par deux pattes 63 et 65 qui forment le pied 61.

Par ailleurs, le pied creux se trouve bien dans le prolongement de l'ouverture 64 ménagée dans le chapeau 6, pour le passage de la tige 50.

La figure 4 montre le dispositif selon l'invention monté sur les panneaux 3 et 4, en étant inséré dans les perçages 30 et 40 de ces panneaux.

La tige 50 est insérée dans l'agrafe 6, de telle sorte que ses parties filetées 52 et 53 se trouvent en regard des deux pattes 63 et 65 du pied 61.

Ainsi, dans cette position montée du dispositif, les extrémités libres 63a et 65a des pattes sont insérées dans le filet des parties filetées 52 et 53 de la tige 50 et s'opposent donc à son extraction de l'agrafe 6.

Dans cette configuration, le dispositif de fixation selon l'invention assure donc un verrouillage efficace.

Lorsqu'on souhaite désolidariser les panneaux 3 et 4, il suffit de tourner la tige 50 d'un quart de tour de telle sorte que les parties lisses 54 et 55 se trouvent en regard des pattes 63 et 65. La tige 50 peut alors être facilement retirée de l'agrafe 6, sans qu'il soit nécessaire de la dévisser.

Bien entendu, la rotation imprimée à la tige 50 pour la déverrouiller dépend de la structure de la tige et du pied et n'est pas nécessairement d'un quart de tour dans tous les cas.

Dans cette variante de réalisation, le déverrouillage du dispositif de fixation selon l'invention est donc plus rapide que dans le mode de réalisation illustré aux figures 1 à 3.

De façon générale, il est préférable que la surface extérieure du pied de l'agrafe corresponde à la forme des perçages pratiqués dans les panneaux 3 et 4, mais ceci n'est pas obligatoire.

L'agrafe du dispositif de fixation selon l'invention est, par ailleurs, avantageusement réalisée en acier trempé.

Il a également été mis en évidence qu'un même dispositif de fixation, tel que décrit jusqu'à présent, pouvait être utilisé pour des panneaux dont l'épaisseur cumulée varie, dans la mesure où le diamètre, ou plus généralement la plus grande dimension transversale, du perçage pratiqué dans le panneau inférieur est choisi de façon appropriée.

On pourra se référer au tableau ci-dessous :

| | | | | |
|---|---|---|---|---|
| épaisseur cumulée des deux panneaux (en mm) | 0,5 à 3 | 3 à 4,5 | 4,5 à 6 | 6 à 7 |
| plus grande dimension transversale du perçage (en mm) | 7,7 | 8,2 | 8,7 | 9,2 |

Le dispositif illustré aux figures 6 à 15 utilise, en tant que pièce mâle 7, un pion présentant un fût 70, dépourvu de tout filetage, et une tête 71.

Comme dans les exemples précédents, la pièce femelle est une agrafe élastique 6 formée d'un chapeau 60 prolongé par un pied creux 61, ce dernier présentant des dimensions transversales internes minimum, Dmin, et maximum, Dmax, respectivement inférieure et supérieure à la plus grande dimension transversale D1 du fût 70.

Le pied creux 61 peut adopter, en fonction au moins d'une position axiale relative du fût 70 et du pied 61, et au moins pour la position de rotation relative du fût et du pied illustrée aux figures 6 et 7, une configuration de non verrouillage (figure 6), dans laquelle le pied 61 présente un encombrement transversal réduit, et une configuration de verrouillage (figure 7), dans laquelle le pied 61 est soumis de la part du fût 70 à une expansion élastique radiale grâce à laquelle les panneaux 3 et 4 sont maintenus en empilement.

Comme dans les exemples précédents, le pied 61 comprend deux pattes 63, 65 présentant des extrémités liées respectives 63b, 65b par lesquelles ces pattes se rattachent au chapeau 60, et des extrémités libres respectives 63a, 65a radialement convergentes, définissant entre elles la dimension transversale interne minimum Dmin du pied 61.

Les pièces mâle 7 et femelle 6 comprennent des accidents de surface respectifs, 72, 73 d'une part et 63a, 65a d'autre part, disposés en regard l'un de l'autre pour la position d'enfoncement extrême de la pièce mâle dans la pièce femelle (figure 7), ces accidents de surface coopérant mutuellement pour assurer le maintien des pièces mâle 7 et femelle 6 dans leur position de verrouillage illustrée à la figure 7.

Comme dans les exemples précédents, les accidents de surface portés par la pièce femelle sont formés par les extrémités libres 63a, 65a des pattes 63, 65, cet agencement n'étant cependant qu'un agencement préféré.

En revanche, bien que toujours formés par des protubérances radiales du fût, les accidents de surface portés par la pièce mâle prennent ici la forme d'ergots 72, 73.

Comme dans les exemples précédents, le chapeau 60 est formé d'une lame ressort repliée sur elle-même et comprenant une branche interne 601 reliée au pied 61 et une branche externe 602 dans laquelle est percée l'ouverture 64 du chapeau.

Les branches interne et externe 601, 602 sont distantes l'une de l'autre pour la configuration de déverrouillage du pied 61, comme le montrent les figures 6 et 8, et sont conformées pour permettre une déformation élastique d'une partie au moins de la branche externe lorsque le pied passe de sa configuration de non verrouillage à sa configuration de verrouillage.

Pour la configuration de verrouillage du pied 61 illustrée à la figure 7, et pour ce mode de réalisation, la tête 71 vient en appui sur la branche externe 602 et rapproche l'une de l'autre les branches interne et externe 601, 602 pour développer entre elles une contrainte élastique permettant d'éliminer les jeux entre les panneaux 3, 4 de l'empilement, cette contrainte pouvant être considérablement augmentée en dotant la branche interne 601 du chapeau de languettes élastiques internes telles que les languettes 6011 et 6012 visibles sur les figures 8 et 14.

Pour obtenir, dans ce mode de réalisation, une déformation élastique efficace de la branche externe 602 du chapeau 60, les branches interne 601 et externe 602 sont conformées pour se raccorder l'une à l'autre à distance de la zone de la branche externe sur laquelle vient s'appuyer la tête 71, la branche externe 602 pouvant ainsi se déformer élastiquement au moins au niveau de ses boucles de raccordement avec la branche interne 601.

Comme le montrent les figures 6 et 10, les ergots 72, 73 sont disposés en regard de fenêtres correspondantes 612, 613 du pied (repérées sur la figure 8), chaque ergot traversant la fenêtre correspondante lorsque le pied 61 est à la fois dans la configuration de non verrouillage et dans la position de rotation relative avec le fût 70 illustrée aux figures 6 et 7.

Le fût 70 comporte deux méplats 74 et 75 (figures 11 et 12), de manière à présenter, en plus de sa plus grande dimension transversale D1 (figure 11), une plus petite dimension transversale D2.

Comme le montre la figure 8, le fût 70 peut ainsi s'inscrire, par sa plus petite dimension transversale, dans l'espace libre E défini entre les pattes 63, 65 pour la configuration de non verrouillage du pied, de sorte que le pied 61 adopte sa configuration de non verrouillage pour la position de rotation relative du fût 70 et du pied 61 illustrée à la figure 8, indépendamment de la position axiale relative des pièces mâle 7 et femelle 6.

Pour éviter une rotation intempestive des pièces mâle et femelle dans la configuration de verrouillage du pied, les pièces mâle 7 et femelle 6 comprennent des accidents de surface respectifs supplémentaires, à savoir 714, 715 d'une part, et 614, 615 d'autre part, en regard l'un de l'autre pour la configuration de verrouillage du pied 61, et qui coopèrent pour maintenir cette configuration.

Ces accidents de surface supplémentaires sont par exemple constitués par des embrèvements 714 et 715 de la tête 71, et par des bossages 614 et 615 du chapeau, comme le montrent les figures 9 et 11, ou par des nervures axiales 714a, 715a du fût et par des découpes correspondantes 614a, 615a du chapeau, comme le montrent les figures 14 et 15.

Comme dans les exemples précédents, l'agrafe 6 est de préférence réalisée par découpage, pliage, et traitement thermique d'un flan d'acier.

Le fût 70 peut enfin, comme le montrent les figures 14 et 15, présenter un bourrelet 709 engagé dans l'ouverture du chapeau à l'encontre d'une force élastique et rendant les pièces mâle et femelle imperdables l'une par rapport à l'autre.

Le dispositif illustré aux figures 16 à 21, qui représente une évolution très avantageuse du dispositif décrit jusqu'à présent, utilise toujours, en tant que pièce mâle 9, un pion présentant un fût 90, dépourvu de tout filetage, et une tête 91.

Comme dans les exemples précédents, la pièce femelle est une agrafe élastique 8 formée d'un chapeau 80 prolongé par un pied creux 81, ce dernier présentant des dimensions transversales internes minimum et maximum respectivement inférieure et supérieure à la plus grande dimension transversale du fût 90.

Le pied creux 81 peut adopter, en fonction au moins d'une position axiale relative du fût 90 et du pied 81, et au moins pour la position de rotation relative du fût et du pied illustrée aux figures 16 et 19, une configuration de non verrouillage (figure 16), dans laquelle le pied 81 présente un encombrement transversal réduit, et une configuration de verrouillage (figure 19), dans laquelle le pied 81 est soumis de la part du fût 90 à une expansion élastique radiale grâce à laquelle les panneaux 3 et 4 sont maintenus en empilement.

Comme dans les exemples précédents, le pied 81 comprend deux pattes 83, 85 présentant des extrémités liées respectives 83b, 85b par lesquelles ces pattes se rattachent au chapeau 80, et des extrémités libres respectives 83a, 85a radialement convergentes, définissant entre elles la dimension transversale interne minimum du pied 81.

Les pièces mâle 9 et femelle 8 comprennent des accidents de surface respectifs, 92, 93 d'une part et 83a, 85a d'autre part, disposés en regard l'un de l'autre pour la position d'enfoncement extrême de la pièce mâle dans la pièce femelle (figure 19), ces accidents de surface coopérant mutuellement pour assurer le maintien des pièces mâle 9 et femelle 8 dans leur position illustrée à la figure 19.

Comme dans les exemples précédents, les accidents de surface portés par la pièce femelle sont formés par les extrémités libres 83a, 85a des pattes 83, 85, cet agencement n'étant cependant qu'un agencement préféré.

Comme pour le dispositif décrit en référence aux figures 6 à 15, les accidents de surface portés par la pièce mâle prennent la forme d'ergots 92 et 93.

Comme dans les exemples précédents également, le chapeau 80 est formé d'une lame ressort repliée sur elle-même et comprenant une branche interne 801 reliée au pied 81 et une branche externe 802 dans laquelle est percée l'ouverture 84 du chapeau, les branches interne et externe 801, 802 étant distantes l'une de l'autre comme le montrent les figures 16 et 17.

Les ergots 92, 93 sont disposés en regard de fenêtres correspondantes 812, 813 du pied (repérées sur la figure 19), chaque ergot traversant la fenêtre correspondante, lorsque le pied 81 est à la fois dans la configuration de non verrouillage et dans la position de rotation relative avec le fût 90 illustrée aux figures 16 et 17.

Le fût 90 comporte deux méplats 94 et 95 (figures 16 et 19), de manière à présenter, en plus de sa plus grande dimension transversale, une plus petite dimension transversale.

Comme le montre la figure 8 pour le mode de réalisation précédent, le fût 90 peut ainsi s'inscrire, par sa plus petite dimension transversale, dans l'espace libre défini entre les pattes 83, 85 pour la configuration de non verrouillage du pied, de sorte que le pied 81 peut adopter sa configuration de non verrouillage indépendamment de la position axiale relative des pièces mâle 9 et femelle 8.

Pour éviter une rotation intempestive des pièces mâle et femelle dans la configuration de verrouillage du pied, les pièces mâle 9 et femelle 8 comprennent des accidents de surface respectifs supplémentaires, prenant par exemple la forme de nervures axiales 914a, 915a du fût et de découpes correspondantes 814a, 815a formant guides, pratiquées dans les languettes radiales 86, 88 du chapeau comme le montre la figure 18.

Des languettes élastiques 8011 et 8012 sont de préférence prévues à l'intérieur de la branche interne 801 du chapeau pour appliquer une pression sur l'empilement de panneaux dans la configuration de verrouillage du pied.

Comme dans les exemples précédents, l'agrafe 8 est de préférence réalisée par découpage, pliage, et traitement thermique d'un flan d'acier, la pièce mâle 9 pouvant quant à elle être constituée par un pion en matière plastique.

En dépit de ses ressemblances avec le dispositif illustré aux figures 6 à 15, le dispositif illustré aux figures 16 à 21 présente une originalité importante, qui lui permet de maintenir des empilements de panneaux d'épaisseurs très différentes, allant par exemple de 0,5 millimètres à 7 millimètres, sans changer la dimension transversale des perçages pratiqués dans les panneaux, par exemple égale à 8,2 millimètres.

Cette originalité réside dans le fait que, pour permettre la déformation élastique de la branche externe 802 du chapeau lorsque le pied 81 passe de sa configuration de non verrouillage à sa configuration de verrouillage, la tête et le chapeau sont conformés de manière que la tête 91 traverse la branche externe 802 du chapeau 80 et s'appuie sur la branche interne 801 de ce chapeau 80 pour la configuration de verrouillage du pied 81.

Comme le montre la figure 19, cet agencement donne à la branche externe 802 du chapeau la possibilité de se déformer élastiquement sur toute sa longueur, et lui confère donc une plus grande capacité à absorber le pincement radial plus ou moins marqué que subit l'agrafe, en fonction de l'épaisseur plus ou moins importante que présente l'empilement de panneaux 3, 4.

Enfin, comme le montre la figure 21, la pièce mâle 9 peut comporter une seconde tête 91a qui reste à l'extérieur de la branche externe 802, même pour la configuration de verrouillage du pied 81.

## Revendications

1. Dispositif de fixation comprenant une pièce mâle (1, 5, 7, 9) et une pièce femelle (2, 6, 8) sélectivement engagées dans des perçages (30, 40) traversant un empilement d'au moins deux panneaux (3, 4), ces pièces coopérant sélectivement entre elles pour maintenir les panneaux en empilement, dispositif dans lequel la pièce femelle (2, 6, 8) est une agrafe élastique formée d'un chapeau (20, 60, 80) prolongé par un pied creux (21, 61, 81) présentant des dimensions transversales internes minimum (Dmin) et maximum (Dmax) différentes, dans lequel la pièce mâle (1, 5, 7, 9) comprend une tête (11, 51, 71, 91) prolongée par un fût (10, 50, 70, 90) présentant au moins une première dimension transversale déterminée (D1), intermédiaire entre les dimensions transversales internes minimum (Dmin) et maximum (Dmax), ce fût étant sélectivement introduit dans le pied creux (21, 61, 81), à travers une ouverture (24, 64, 84) du chapeau et le pied creux (21, 61, 81) adoptant sélectivement, en fonction au moins d'une position axiale relative du fût (10, 50, 70, 90) et du pied creux (21, 61, 81), et pour au moins une première position de rotation relative du fût et du pied, une configuration de non verrouillage dans laquelle le pied (21, 61, 81) présente un encombrement transversal réduit, et une configuration de verrouillage, dans laquelle le pied (21, 61, 81) est soumis de la part du fût (10, 50, 70, 90) à une expansion élastique radiale, **caractérisé en ce que** le chapeau (20, 60, 80) est formé d'une lame ressort repliée sur elle-même et comprenant au moins une branche interne (201, 601, 801) reliée au pied creux (21, 61, 81) et une branche externe (202, 602, 802) dans laquelle est percée l'ouverture (24, 64, 84) du chapeau, et **en ce que** les branches interne et externe (201, 202; 601, 602; 801, 802) sont distantes l'une de l'autre au moins pour la configuration de non verrouillage du pied creux (21, 61, 81) et sont conformées pour permettre une déformation élastique d'une partie au moins de la branche externe (202, 602, 802) lorsque le pied (21, 61, 81) passe de sa configuration de non verrouillage à sa configuration de verrouillage.

2. Dispositif de fixation suivant la revendication 1, **caractérisé en ce que** le pied creux (21, 61, 81) comprend une pluralité de pattes (23, 25; 63, 65; 83, 85) présentant des extrémités liées respectives (63b, 65b; 83b, 85b) par lesquelles ces pattes se rattachent au chapeau (20, 60, 80), et des extrémités libres respectives (63a, 65a; 83a, 85a) radialement convergentes, définissant entre elles la dimension transversale interne minimum (Dmin) du pied (21, 61, 81).

3. Dispositif de fixation suivant l'une quelconque des revendications précédentes, **caractérisé en ce que** les pièces mâle (1, 5, 7, 9) et femelle (2, 6, 8) comprennent au moins des premier (100; 52, 53; 72, 73; 92, 93) et second (23a, 25a; 63a, 65a; 83a, 85a) accidents de surface respectifs disposés en regard l'un de l'autre pour une position relative axiale extrême des pièces mâle et femelle, sélectivement obtenue par introduction complète du fût (10, 50, 70, 90) dans le pied (21, 61, 81), les premier et second accidents de surface coopérant mutuellement pour assurer un maintien des pièces mâle (1, 5, 7, 9) et femelle (2, 6, 8) dans leur position relative axiale extrême.

4. Dispositif de fixation suivant la revendication 3 **caractérisé en ce que** le premier accident de surface est formé par une protubérance radiale du fût, telle qu'un filet de vis (100; 52, 53) ou un ergot (72, 73; 92, 93).

5. Dispositif de fixation suivant la revendication 4, **caractérisé en ce que** le premier accident de surface est un ergot (72, 73; 92, 93) disposé en regard d'une fenêtre correspondante (612, 613; 812, 813) du pied, et **en ce que** l'ergot traverse la fenêtre lorsque le pied (61, 81) est à la fois dans la configuration de non verrouillage et dans la première position de rotation relative avec le fût (70, 90).

6. Dispositif de fixation suivant l'une quelconque des revendications précédentes combinée aux revendications 2 et 3, **caractérisé en ce que** le second accident de surface est formé par les extrémités libres des pattes (23a, 25a; 63a, 65a; 83a, 85a).

7. Dispositif de fixation suivant l'une quelconque des revendications précédentes combinée à la revendication 2, **caractérisé en ce que** le pied creux (61, 81) comprend deux pattes (63, 65; 83, 85) séparées l'une de l'autre par un espace libre (E) pour la configuration de non verrouillage du pied, et **en ce que** le fût (50, 70, 90) présente au moins une seconde dimension transversale (D2) s'inscrivant sélectivement dans l'espace libre, ce dont il résulte que le pied creux (61; 81) adopte sélectivement sa configuration non verrouillage pour une seconde position de rotation relative du fût (50, 70, 90) et du pied (61, 81), indépendamment de la position axiale relative des pièces mâle et femelle.

8. Dispositif de fixation suivant la revendication 7, **caractérisé en ce que** les pièces mâle (7) et femelle (6) comprennent au moins des troisième (714, 715) et quatrième (614, 615) accidents de surface respectifs disposés en regard l'un de l'autre pour la configuration de verrouillage du pied (61), ces troisième et quatrième accidents de surface coopérant mutuellement pour assurer un maintien des pièces mâle (7) et femelle (6) dans leur première position de rotation relative.

9. Dispositif de fixation suivant l'une quelconque des revendications précédentes, **caractérisé en ce qu'**au moins une languette élastique radiale (26, 28; 86, 88) est prévue dans l'ouverture (24) du chapeau pour coopérer sélectivement avec le fût.

10. Dispositif de fixation suivant l'une quelconque des revendications précédentes, **caractérisé en ce que** la branche interne (601, 801) du chapeau comporte au moins deux languettes élastiques internes (6011, 6012; 8011, 8012) propres à appliquer une pression sur l'empilement de panneaux dans la configuration de verrouillage du pied.

11. Dispositif de fixation suivant l'une quelconque des revendications précédentes, **caractérisé en ce que** l'agrafe est réalisée par découpage, pliage et traitement thermique d'un flan métallique.

12. Dispositif de fixation suivant l'une quelconque des revendications précédentes, **caractérisé en ce que** l'agrafe (2, 6, 8) est réalisée en acier trempé.

13. Dispositif de fixation suivant l'une quelconque des revendications précédentes combinée à la revendication 8, **caractérisé en ce que** les troisième (714a, 715a; 914a, 915a) et quatrième (614a, 615a; 814a, 815a) accidents de surface sont respectivement constitués par une nervure axiale du fût et par une découpe correspondante du chapeau.

14. Dispositif de fixation suivant l'une quelconque des revendications précédentes combinée à la revendication 8, **caractérisé en ce que** les troisième et quatrième accidents de surface sont respectivement constitués par un embrèvement de la tête et par un bossage du chapeau.

15. Dispositif de fixation suivant l'une quelconque des revendications précédentes, **caractérisé en ce que** le fût (70) présente un bourrelet (709) engagé dans l'ouverture du chapeau à l'encontre d'une force élastique et rendant les pièces mâle et femelle imperdables l'une par rapport à l'autre.

16. Dispositif de fixation suivant l'une quelconque des revendications précédentes, **caractérisé en ce que** la tête (11, 51, 71) est en appui sur la branche externe (202, 602), pour la configuration de verrouillage du pied (21, 61), et rapproche l'une de l'autre les branches interne et externe (201, 202; 601, 602) pour développer entre elles une contrainte élastique.

17. Dispositif de fixation suivant l'une quelconque des revendications 1 à 13, **caractérisé en ce que** la tête (91) traverse la branche externe (802) et s'appuie sur la branche interne (801) du chapeau (80) pour la configuration de verrouillage du pied (81).

18. Dispositif de fixation suivant la revendication 17, **caractérisé en ce que** la pièce mâle (9) comporte une seconde tête (91a) qui reste à l'extérieur de la branche externe (802), même pour la configuration de verrouillage du pied (81).

19. Ensemble constitué d'un dispositif de fixation suivant l'une quelconque des revendications 1 à 16 et d'un empilement de panneaux (3, 4) dans lequel sont pratiqués des perçages (30, 40) et comprenant un panneau inférieur (4), ensemble dans lequel l'épaisseur de l'empilement est comprise entre 0,5 et 3 mm, tandis que le perçage du panneau inférieur a une plus grande dimension transversale de 7,7 mm.

20. Ensemble constitué d'un dispositif de fixation suivant l'une quelconque des revendications 1 à 16 et d'un empilement de panneaux (3, 4) dans lequel sont pratiqués des perçages (30, 40) et comprenant un panneau inférieur (4), ensemble dans lequel l'épaisseur de l'empilement est comprise entre 3 et 4,5 mm, tandis que le perçage du panneau inférieur (4) a une plus grande dimension transversale de 8,2 mm.

21. Ensemble constitué d'un dispositif de fixation suivant l'une quelconque des revendications 1 à 16 et d'un empilement de panneaux (3, 4) dans lequel sont pratiqués des perçages (30, 40) et comprenant un panneau inférieur (4), ensemble dans lequel l'épaisseur de l'empilement est comprise entre 4,5 et 6 mm, tandis que le perçage du panneau inférieur (4) a une plus grande dimension transversale de 8,7 mm.

22. Ensemble constitué d'un dispositif de fixation suivant l'une quelconque des revendications 1 à 16 et d'un empilement de panneaux (3, 4) dans lequel sont pratiqués des perçages (30, 40) et comprenant un panneau inférieur (4), ensemble dans lequel l'épaisseur de l'empilement est comprise entre 6 et 7 mm, tandis que le perçage du panneau inférieur (4) a une plus grande dimension transversale de 9,2 mm.

## Patentansprüche

1. Befestigungsvorrichtung mit einem Einsteckteil (1, 5, 7, 9) und einem Aufnahmeteil (2, 6, 8), die selektiv in Bohrungen (30, 40) eingreifen, die eine Stapelung von zumindest zwei Paneelen (3, 4) durchsetzen, wobei diese Teile selektiv miteinander zusammenwirken, um die Panelle in Stapelung zu halten, in welcher Vorrichtung das Aufnahmeteil (2, 6, 8) eine Federklammer ist, die aus einer Abdeckung (20, 60, 80) gebildet ist, welche sich über einen Hohlfuß (21, 61, 81) fortsetzt, der eine unterschiedliche minimale (Dmin) und maximale Innenquerabmessung (Dmax) aufweist, wobei das Einsteckteil (1, 5, 7, 9) einen Kopf (11, 51, 71, 91) enthält, der sich über einen Schaft (10, 50, 70, 90) fortsetzt, der zumindest eine bestimmte erste Querabmessung (D1) aufweist, die zwischen der minimalen (Dmin) und maximalen Innenquerabmessung (Dmax) liegt, wobei dieser Schaft selektiv in den Hohlfuß (21, 61, 81) durch eine Öffnung (24, 64, 84) der Abdeckung eingeführt wird und der Hohlfuß (21, 61, 81) in Abhängigkeit von zumindest einer relativen Axialstellung des Schafts (10, 50, 70, 90) und des Hohlfußes (21, 61, 81) und in zumindest einer ersten relativen Drehstellung des Schafts und des Fußes selektiv eine Nichtverriegelungsgestalt annimmt, in welcher der Fuß (21, 61, 81) ein vermindertes Quervolumen aufweist, sowie eine Verriegelungsgestalt, in welcher der Fuß (21, 61, 81) seitens Schaft (10, 50, 70, 90) einer radialen elastischen Dehnung unterliegt, **dadurch gekennzeichnet, dass** die Abdeckung (20, 60, 80) aus einem Federblatt gebildet ist, das um sich selbst umgeschlagen ist und zumindest einen mit dem Hohlfuß (21, 61, 81) verbundenen Innenschenkel (201, 601, 801) und einen Außenschenkel (202, 602, 802) enthält, in welchem die Öffnung (24, 64, 84) der Abdeckung eingebracht ist, und dass der Innen- und Außenschenkel (201, 202; 601, 602; 801, 802) zumindest bei Nichtverriegelungsgestalt des Hohlfußes (21, 61, 81) voneinander beabstandet und so geformt sind, dass sie eine elastische Verformung zumindest eines Teils des Außenschenkels (202, 602, 802) zulassen, wenn der Fuß (21, 61, 81) aus seiner Nichtverriegelungsgestalt in seine Verriegelungsgestalt übergeht.

2. Befestigungsvorrichtung nach Anspruch 1, **dadurch gekennzeichnet, dass** der Hohlfuß (21, 61, 81) mehrere Laschen (23, 25; 63, 65; 83, 85) mit jeweils verbundenen Enden (63b, 65b; 83b, 85b) enthält, über welche sich diese Laschen an die Abdeckung (20, 60, 80) anfügen, sowie mit jeweiligen freien Enden (63a, 65a; 83a, 85a), die radial aufeinander zulaufen und zwischen einander die minimale Innenquerabmessung (Dmin)des Fußes (21, 61, 81) definieren.

3. Befestigungsvorrichtung nach einem der vorangehenden Ansprüche, **dadurch gekennzeichnet, dass** das Einsteckteil (1, 5, 7, 9) und. das Aufnahmeteil (2, 6, 8) jeweils zumindest erste Flächenverwerfung (100; 52, 53; 72, 73; 92, 93) und eine zweite Flächenverwerfung (23a, 25a; 63a, 65a; 83a, 85a) enthalten, die in relativer axialer Endstellung des Einsteck- und des Aufnahmeteils einander gegenüberliegend angeordnet sind, welche Stellung selektiv durch vollständiges Einführen des Schafts (10, 50, 70, 90) in den Fuß (21, 61, 81) vorliegt, wobei die erste und die zweite Flächenverwerfung miteinander zusammenwirken, um einen Halt des Einsteckteils (1, 5, 7, 9) und des Aufnahmeteils (2, 6, 8) in ihrer relativen axialen Endstellung zu gewährleisten.

4. Befestigungsvorrichtung nach Anspruch 3, **dadurch gekennzeichnet, dass** die erste Flächenverwerfung von einem radialen Vorsprung des Schafts gebildet ist, wie etwa einem Schraubengewinde (100; 52, 53) oder einer Nase (72, 73; 92, 93).

5. Befestigungsvorrichtung nach Anspruch 4, **dadurch gekennzeichnet, dass** die erste Flächenverwerfung eine Nase (72, 73; 92, 93) ist, die einem entsprechenden Fenster (612, 613; 812, 813) des Fußes gegenüberliegend angeordnet ist, und dass die Nase das Fenster dann durchquert, wenn sich der Fuß (61, 81) zugleich in der Nichtverrieglungsgestalt und in der ersten relativen Drehstellung zum Schaft (70, 90) befindet.

6. Befestigungsvorrichtung nach einem der vorangehenden Ansprüche in Kombination mit Anspruch 2 und 3, **dadurch gekennzeichnet, dass** die zweite Flächenverwerfung aus den freien Enden der Laschen (23a, 25a; 63a, 65a; 83a, 85a) gebildet ist.

7. Befestigungsvorrichtung nach einem der vorangehenden Ansprüche in Kombination mit Anspruch 2, **dadurch gekennzeichnet, dass** der Hohlfuß (61, 81) zwei Laschen (63, 65; 83, 85) enthält, die in Nichtverriegelungsgestalt des Fußes durch einen Freiraum (E) voneinander getrennt sind, und dass der Schaft (50, 70, 90) zumindest eine zweite Querabmessung (D2) aufweist, die sich selektiv in den Freiraum einbeschreibt, wodurch sich ergibt, dass der Hohlfuß (61; 81) bei einer zweiten relativen Drehstellung des Schafts (50, 70, 90) und des Fußes (61, 81) unabhängig von der relativen Axialstellung des Einsteck- und des Aufnahmeteils selektiv seine Nichtverriegelungsgestalt annimmt.

8. Befestigungsvorrichtung nach Anspruch 7, **dadurch gekennzeichnet, dass** das Einsteckteil (7) und das Aufnahmeteil (6) zumindest eine jeweilige dritte (714, 715) und vierte Flächenverwerfung (614, 615) aufweisen, die in Verriegelungsgestalt des Fußes (61) einander gegenüberliegend angeordnet sind, wobei diese dritte und vierte Flächenverwerfung miteinander zusammenwirken, um einen Halt des Einsteckteils (7) und des Aufnahmeteils (6) in ihrer ersten relativen Drehstellung zu gewährleisten.

9. Befestigungsvorrichtung nach einem der vorangehenden Ansprüche, **dadurch gekennzeichnet, dass** zumindest eine radiale Federzunge (26, 28; 86, 88) in der Öffnung (24) der Abdeckung vorgesehen ist, um selektiv mit dem Schaft zusammenzuwirken.

10. Befestigungsvorrichtung nach einem der vorangehenden Ansprüche, **dadurch gekennzeichnet, dass** der Innenschenkel (601, 801) der Abdeckung zumindest zwei innere Federzungen (6011, 6012; 8011, 8012) enthält, die in Verriegelungsgestalt des Fußes einen Druck auf die Stapelung der Paneele aufbringen können.

11. Befestigungsvorrichtung nach einem der vorangehenden Ansprüche, **dadurch gekennzeichnet, dass** die Klammer durch Ausstanzen, Umbiegen und Wärmebehandlung eines Metallzuschnitts hergestellt ist.

12. Befestigungsvorrichtung nach einem der vorangehenden Ansprüche, **dadurch gekennzeichnet, dass** die Klammer (2, 6, 8) aus gehärtetem Stahl hergestellt ist.

13. Befestigungsvorrichtung nach einem der vorangehenden Ansprüche in Kombination mit Anspruch 8, **dadurch gekennzeichnet, dass** die dritte (714a, 715a; 914a, 915a) und die vierte Flächenverwerfung (614a, 615a; 814a, 815a) jeweils aus einer axialen Rippe des Schafts bzw. aus einem entsprechenden Ausschnitt der Abdeckung bestehen.

14. Befestigungsvorrichtung nach einem der vorangehenden Ansprüche in Kombination mit Anspruch 8, **dadurch gekennzeichnet, dass** die dritte und die vierte Flächenverwerfung jeweils aus einer Vertiefung des Kopfes bzw. aus einer Erhöhung der Abdeckung bestehen.

15. Befestigungsvorrichtung nach einem der vorangehenden Ansprüche, **dadurch gekennzeichnet, dass** der Schaft (70) eine Wulst (709) aufweist, die in die Öffnung der Abdeckung entgegen einer Federkraft eingreift und das Einsteck- und das Aufnahmeteil unverlierbar aneinander hält.

16. Befestigungsvorrichtung nach einem der vorangehenden Ansprüche, **dadurch gekennzeichnet, dass** der Kopf (11, 51, 71) sich in Verriegelungsgestalt des Fußes (21, 61) an dem Außenschenkel (202, 602) abstützt und den Innen- und den Außenschenkel (201, 202; 601, 602) einander annähert, um zwischen diesen eine elastische Vorspannung zu erzeugen.

17. Befestigungsvorrichtung nach einem der Ansprüche 1 bis 13, **dadurch gekennzeichnet, dass** der Kopf (91) den Außenschenkel (802) durchdringt und sich in Verriegelungsgestalt des Fußes (81) am Innenschenkel (801) der Abdeckung (80) abstützt.

18. Befestigungsvorrichtung nach Anspruch 17, **dadurch gekennzeichnet, dass** das Einsteckteil (9) einen zweiten Kopf (91a) enthält, der selbst bei Verriegelungsgestalt des Fußes (81) außerhalb des Außenschenkels (802) verbleibt.

19. Einheit aus einer Befestigungsvorrichtung nach einem der Ansprüche 1 bis 16 und aus einer Stapelung von Paneelen (3, 4), in der Bohrungen (30, 40) ausgeführt sind und die ein unteres Paneel (4) enthält, wobei die Dicke der Stapelung zwischen 0,5 und 3 mm beträgt, während die Bohrung des unteren Paneels eine größere Querabmessung von 7,7 mm aufweist.

20. Einheit aus einer Befestigungsvorrichtung nach einem der Ansprüche 1 bis 16 und aus einer Stapelung von Paneelen (3, 4), in der Bohrungen (30, 40) ausgeführt sind und die ein unteres Paneel (4) enthält, wobei die Dicke der Stapelung zwischen 3 und 4,5 mm beträgt, während die Bohrung des unteren Paneels (4) eine größere Querabmessung von 8,2 mm aufweist.

21. Einheit aus einer Befestigungsvorrichtung nach einem der Ansprüche 1 bis 16 und aus einer Stapelung von Paneelen (3, 4), in der Bohrungen (30, 40) ausgeführt sind und die ein unteres Paneel (4) enthält, wobei die Dicke der Stapelung zwischen 4,5 und 6 mm beträgt, während die Bohrung des unteren Paneels (4) eine größere Querabmessung von 8,7 mm aufweist.

22. Einheit aus einer Befestigungsvorrichtung nach einem der Ansprüche 1 bis 16 und aus einer Stapelung von Paneelen (3, 4), in der Bohrungen (30, 40) ausgeführt sind und die ein unteres Paneel (4) enthält, wobei die Dicke der Stapelung zwischen 6 und 7 mm beträgt, während die Bohrung des unteren Paneels (4) eine größere Querabmessung von 9,2 mm aufweist.

## Claims

1. A fastening device comprising a male part (1, 5, 7, 9) and a female part (2, 6, 8) selectively engaging in apertures (30, 40) which pass through a stack of at least two panels (3, 4), said parts cooperating selectively with one another to maintain the panels in a stacked formation, the female part (2, 6, 8) of which fastening device is an elastic clip formed by a cap portion (20, 60, 80) extended by a hollow foot (21, 61, 81) having different minimum (Dmin) and maximum (Dmax) transverse internal dimensions, and the male part (1, 5, 7, 9) of which fastening device comprises a head (11, 51, 71, 91) extended by a stud (10, 50, 70, 90) having at least one determinate first transverse dimension (D1) intermediate between the minimum (Dmin) and maximum (Dmax)) transverse internal dimensions, said stud being selectively introduced into the hollow foot (21, 61, 81) through an opening (24, 64, 84) in the cap portion and the hollow foot (21, 61, 81) selectively adopting, as a function of at least one relative axial position of the stud (10, 50, 70, 90) and of the hollow foot (21, 61, 81) and for at least one first position of relative rotation of the stud and the foot, a non-locking configuration in which the foot (21, 61, 81) presents a reduced transverse space requirement and a locking configuration in which the foot (21, 61, 81) is subjected by the stud (10, 50, 70, 90) to elastic radial expansion, **characterised in that** the cap portion (20, 60, 80) is formed by a spring blade folded on itself and comprising at least one inner branch (201, 601, 801) connected to the hollow foot (21, 61, 81) and an outer branch (202, 602, 802) in which the opening (24, 64, 84) of the cap portion is formed, and **in that** the inner and outer branches (201, 202; 601, 602; 801, 802) are spaced apart from one another at least for the non-locking configuration of the hollow foot (21, 61, 81) and are formed so as to permit elastic deformation of at least a part of the outer branch (202, 602, 802) when the foot (21, 61, 81) moves from its non-locking configuration to its locking configuration.

2. Fastening device according to claim 1, **characterised in that** the hollow foot (21, 61, 81) includes a plurality of tabs (23, 25; 63, 65; 83, 85) having respective connected ends (63b, 65b; 83b, 85b) by which said tabs are attached to the cap portion (20, 60, 80) and radially converging respective free ends (63a, 65a; 83a, 85a) which define between them the minimum internal transverse dimension (Dmin) of the foot (21, 61, 81).

3. Fastening device according to either of the preceding claims, **characterised in that** the male (1, 5, 7, 9) and female (2, 6, 8) parts include at least first (100; 52, 53; 72, 73; 92, 93) and second (23a, 25a; 63a, 65a; 83a, 85a) respective surface irregularities disposed opposite one another for a relative axial end position of the male and female parts selectively obtained by completely introducing the stud (10, 50, 70, 90) into the foot (21, 61, 81), the first and second surface irregularities cooperating mutually to ensure retention of the male (1, 5, 7, 9) and female (2, 6, 8) parts in their relative axial end position.

4. Fastening device according to claim 3, **characterised in that** the first surface irregularity is formed by a radial projection of the stud such as a screw thread (100; 52, 53) or a lug (72, 73; 92, 93).

5. Fastening device according to claim 4, **characterised in that** the first surface irregularity is a lug (72, 73; 92, 93) disposed opposite a corresponding window (612, 613; 812, 813) of the foot, and **in that** the lug passes through the window when the foot (61, 81) is at the same time in the non-locking configuration and in the first position of relative rotation with respect to the stud (70, 90).

6. Fastening device according to any one of the preceding claims combined with claims 2 and 3, **characterised in that** the second surface irregularity is formed by the free ends of the tabs (23a, 25a; 63a, 65a; 83a, 85a).

7. Fastening device according to any one of the preceding claims combined with claim 2, **characterised in that** the hollow foot (61, 81) includes two tabs (63, 65; 83, 85) separated from one another by a free space (E) for the non-locking configuration of the foot, and **in that** the stud (50, 70, 90) has at least one second transverse dimension (D2) which fits selectively into the free space, with the result that the hollow foot (61; 81) selectively adopts its non-locking configuration for a second position of relative rotation of the stud (50, 70, 90) and of the foot (61, 81), independently of the relative axial positions of the male and female parts.

8. Fastening device according to claim 7, **characterised in that** the male (7) and female (6) parts include at least third (714, 715) and fourth (614, 615) respective surface irregularities disposed opposite one another for the locking configuration of the foot (61), said third and fourth surface irregularities cooperating mutually to ensure the retention of the male (7) and female (6) parts in their first position of relative rotation.

9. Fastening device according to any one of the preceding claims, **characterised in that** at least one radial elastic tongue (26, 28; 86, 88) is provided in the opening (24) of the cap portion to cooperate selectively with the stud.

10. Fastening device according to any one of the preceding claims, **characterised in that** the inner branch (601, 801) of the cap portion includes at least two elastic inner tongues (6011, 6012; 8011, 8012) adapted to apply pressure to the stack of panels in the locking configuration of the foot.

11. Fastening device according to any one of the preceding claims, **characterised in that** the clip is formed by cutting, folding and heat-treating a metal blank.

12. Fastening device according to any one of the preceding claims, **characterised in that** the clip (2, 6, 8) is made of hardened steel.

13. Fastening device according to any one of the preceding claims combined with claim 8, **characterised in that** the third (714a, 715a; 914a, 915a) and fourth (614a, 615a; 814a, 815a) surface irregularities are formed respectively by an axial rib of the stud and a corresponding cut-out of the cap portion.

14. Fastening device according to any one of the preceding claims combined with claim 8, **characterised in that** the third and fourth surface irregularities are formed respectively by a recess in the head and a boss on the cap portion.

15. Fastening device according to any one of the preceding claims, **characterised in that** the stud (70) has a bead (709) engaging in the opening of the cap portion against an elastic force and preventing loss of the male and female parts with respect to one another.

16. Fastening device according to any one of the preceding claims, **characterised in that** the head (11, 51, 71) bears against the outer branch (202, 602) for the locking configuration of the foot (21, 61), and moves the inner and outer branches (201, 202; 601, 602) towards one another to generate an elastic stress therebetween.

17. Fastening device according to any one of claims 1 to 13, **characterised in that** the head (91) passes through the outer branch (802) and rests against the inner branch (801) of the cap portion (80) for the locking configuration of the foot (81).

18. Fastening device according to claim 17, **characterised in that** the male part (9) includes a second head (91a) which remains outside the outer branch (802), even for the locking configuration of the foot (81).

19. An assembly formed by a fastening device according to any one of claims 1 to 16 and by a stack of panels (3, 4) in which apertures (30, 40) are formed and including a lower panel (4), wherein the thickness of the stack is between 0.5 and 3 mm, while the aperture of the lower panel has a largest transverse dimension of 7.7 mm.

20. Assembly formed by a fastening device according to any one of claims 1 to 16 and by a stack of panels (3, 4) in which apertures (30, 40) are formed and including a lower panel (4), wherein the thickness of the stack is between 3 and 4.5 mm, while the aperture of the lower panel (4) has a largest transverse dimension of 8.2 mm.

21. Assembly formed by a fastening device according to any one of claims 1 to 16 and by a stack of panels (3, 4) in which apertures (30, 40) are formed and including a lower panel (4), wherein the thickness of the stack is between 4.5 and 6 mm, while the aperture of the lower panel (4) has a largest transverse dimension of 8.7 mm.

22. Assembly formed by a fastening device according to any one of claims 1 to 16 and by a stack of panels (3, 4) in which apertures (30, 40) are formed and including a lower panel (4), wherein the thickness of the stack is between 6 and 7 mm, while the aperture of the lower panel (4) has a largest transverse dimension of 9.2 mm.
